# EUROPEAN PATENT APPLICATION

(11) **EP 4 530 913 A1**
(43) Date of publication of application: **02.04.2025**
(21) Application number: 23200636.1
(22) Date of filing: 28.09.2023
(51) Int. Cl.: G06F 30/27, G05B 17/02, G05B 19/418, G06N 20/00, G06N 3/098, G06F 111/02

(54) **METHOD AND SYSTEM FOR TRAINING MACHINE LEARNING MODELS FOR SIMULATION AND FOR SUPER-RESOLUTION GENERATION**

(71) Applicant: Siemens Industry Software NV, 3001 Leuven (BE)
(72) Inventor: The designation of the inventor has not yet been filed
(74) Representative: Siemens Patent Attorneys

(57) **Abstract**

Simulation Tools are used everywhere in the industry today. Machine Learning (ML) offers a unique technology to address the challenge of speed and accuracy in the simulation world. Creating the training data for the ML Model is cumbersome and expensive, if not distributed over many parties. But the problem is: only very few parties, and hardly anyone within industry, is willing to share the data (e. g., a flow field around a car, or the temperature distribution within a gas turbine), as it might reveal intellectual property. This data-challenge limits the applicability of ML-models today.

The invention combines local incremental learning approaches for ML-acceleration, and ML-based super-resolution technologies with a federated learning approach.

## Description

Simulation Tools are used everywhere in the industry today. From the design of the shape of products and the calculation of influence on physical parameters such as air flow, noise generation (acoustics) or aerodynamic drag. Some of the physical formulars for simulation are quite complex and so simulation as such is also a time- and cost-intensive task. On the other hand, especially the design process comprises information that is confidential and should be kept secret from competitors.

Therefore, increasing speed, accuracy, robustness, and ease of use is a continuous endeavor of all Computer Aided Engineering (CAE) providers. Computer Aided Engineering CAE is the application of computer-aided, mathematical analysis and simulation techniques in the product development process. CAE combines computer-aided design (CAD) with disciplines such as finite element analysis (FEA), computational fluid dynamics (CFD), Multiphysics, and engineering calculations. The goal of CAE is to develop products, assemblies and components that are not only validated for their operating conditions, but also optimized for desired properties such as weight and strength. Making a significant advancement in one of these dimensions will directly allow to handle more complex engineering problems faster. Furthermore, increasing the efficiency of today's simulation tools is crucial when it comes to more automated design optimization.

Machine Learning (ML) offers a unique technology to address this challenge and there exists several data-driven approaches to speed up solvers. Machine learning is an umbrella term for solving problems for which development of algorithms by human programmers would be cost-prohibitive, and instead the problems are solved by helping machines 'discover' their 'own' algorithms, without needing to be explicitly told what to do by any human-developed algorithms.

However, any ML-based solution is constrained by the data available to train them. To make the models extrapolate well over a wide range of conditions a vast amount of data is necessary. For example, in fluid mechanics, the Reynolds number is a dimensionless quantity that helps predict fluid flow patterns in different situations by measuring the ratio between inertial and viscous forces.

Creating the training data is cumbersome and expensive, if not distributed over many parties. But the problem is: only very few parties, and hardly anyone within industry, is willing to share the data (e. g., a flow field around a car, or the temperature distribution within a gas turbine), as it might reveal intellectual property. This data-challenge limits the applicability of ML-models today.

Machine Learning (ML) offers a unique technology to address this challenge and there exists several data-driven approaches to speed up solvers.

A solver is a piece of mathematical software, that 'solves' a mathematical problem by taking problem descriptions in some sort of generic form and calculating their solution. It is creating a program or library that can easily be applied to other problems of similar type.

However, any ML-based solution is constrained by the data available to train them. To make the models extrapolate well over a wide range of conditions (e. g., Reynolds number), a vast amount of data is necessary. Creating the training data is cumbersome and expensive, if not distributed over many parties. Only very few parties, and hardly anyone within industry, is willing to share the data (e. g., a flow field around a car, or the temperature distribution within a gas turbine), as it might reveal intellectual property. This data-challenge is one of the main limitations of the applicability of ML-models today.

In the past decades, acceleration of solvers has relied on hardware improvements, e. g., exploiting increasing clock speed as well as many-core processors such as Graphic Processor Units, GPUs, as well as on algorithmic improvements of the underlying discretization in linear and non-linear solver technology. Corresponding technologies have reached a mathematical optimum, e. g., discretization can be formulated as optimization problems allowing to minimize the number of degrees of freedom for a given accuracy / maximize the accuracy for a given number of degrees of freedom and solvers scaling linearly with the number of unknowns.

With the increased popularity of Machine Learning, the use has been in the focus for acceleration of solvers. Thereby, the effort has been focused on response surface modelling, i.e., parameterized models trained with full simulation data, as well as coming up with new solver ideas, or with completely new solver technology. These approaches are however either not competitive with state-of the art solvers in terms of accuracy and speed or have an enormous data requirement for training, which limits their general applicability.

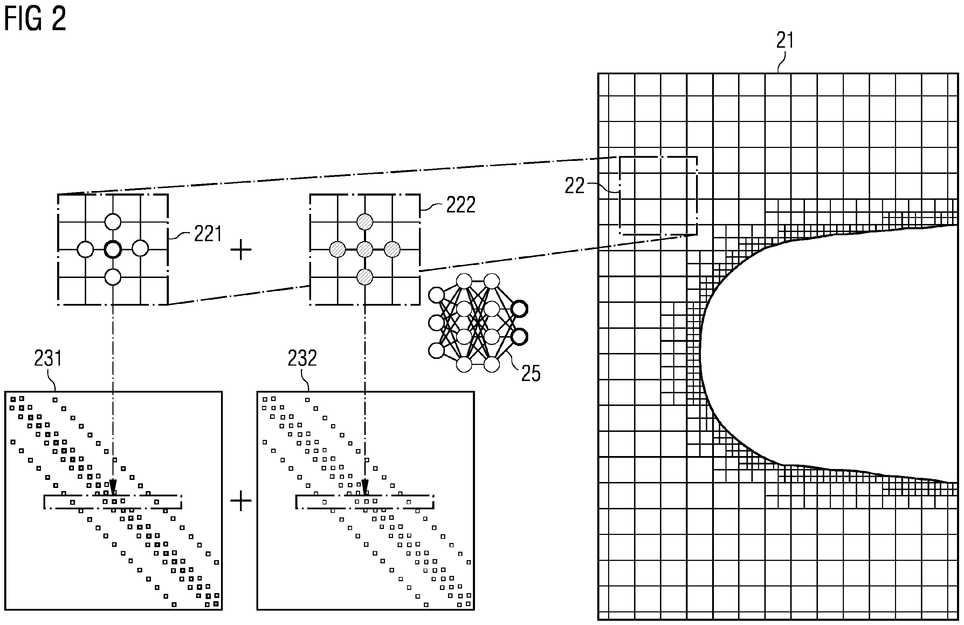

Recently, new super-/multi-/high-resolution concepts for acceleration of solvers have emerged, e. g., providing more effective coarse-grained models or directly addressing the solver level. These relatively new technologies recently proposed in the literature differ in terms of previous approaches by taking a local learning approach. An example is depicted in figure 2.

Figure 2 shows on the left side as an example a 3D physics solver with a local ML-based correction - the additional stencil on the right side is learned by a ML algorithm 25 where the local correction / stencil 221, 222 could depend on the local velocities, pressure or even a signed distance field of the boundary. The matrix 221, 222 is reduced to 231, 232 containing a huge number of "0".

Spatially local corrections to a global solution are used, calculated by a classical solver. Due to their local nature, these corrections require to learn only local phenomena and not global ones. Thus, generally they are easier to train and require less data. With corrections 222 embedded internal to the solver, they allow to leverage the solver in the loop training concepts, 25, which are superior to standard learning concepts in terms of data requirements as well as extrapolation capabilities. Even though corresponding approaches require less data for training, appropriate means to get corresponding data is still a major challenge.

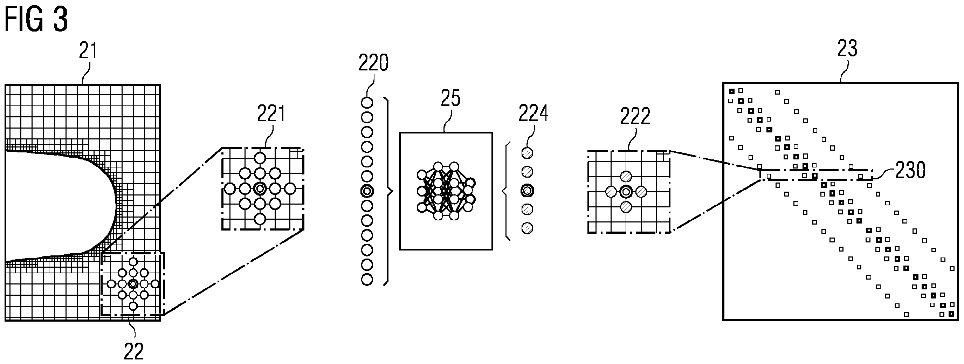

Thereby the training is of a pure local nature, like depicted in Figure 3, which has several advantages.

First, the ML model 25 has superior extrapolation capabilities since local relationships are much less complex than global ones.

Second, a single simulation can be considered as many local datasets, i.e., a single simulation corresponds to multiple datasets (on the order of discretization points 22) compared to only one dataset taking a global approach 21.

Figure 3 shows a concept of a local learning approach, where a correction stencil is learned, 25. The corresponding training problem 221 is quite low dimensional and thus has likely better extrapolation capabilities than extremely complex models.

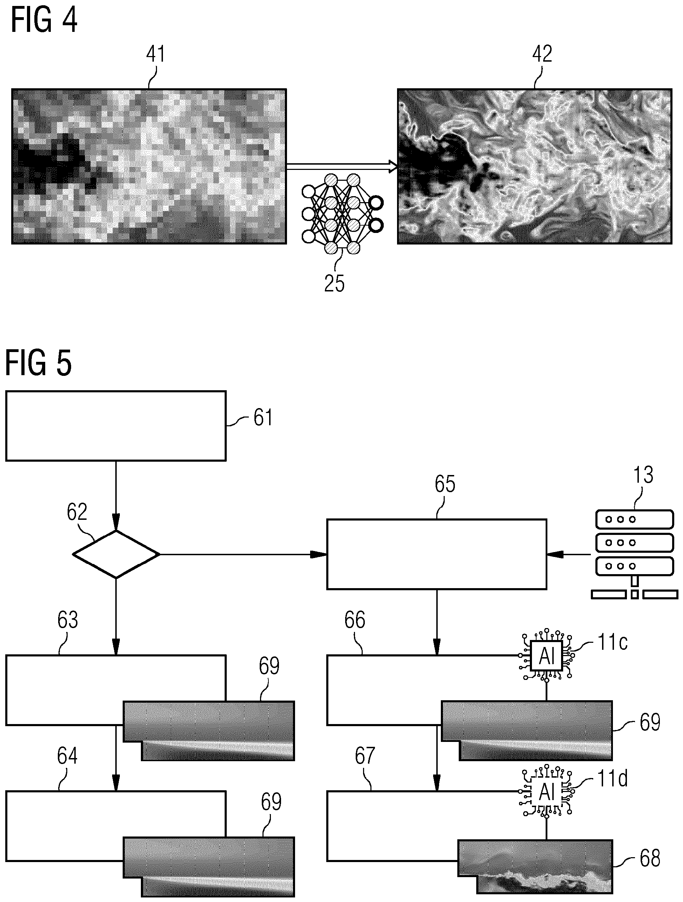

Beyond the acceleration of simulation models, ML has been proposed for super-resolution of low and medium resolution simulations. Figure 4 shows an example of the Super-resolution of a medium-resolution simulation 41 to a high-resolution simulation 42. That is given a previously calculated flow field, additional details are added to the visualization in a post-processing process 25, to let it look more realistically, for example by an autoencoder.

Examples include smoothing but also adding finer scale and temporal dependent turbulent structures. Since this is in general a post-processing process, it does not affect the coarse-grain computation. Therefore, the additionally induced viscosity of these fine-scale structures is seen only in the visualization and is not affecting the global fluid flow as in reality.

However, despite several ML-learning technologies have been developed in the last years, the problem of getting sufficient data for the training of general-purpose models has not been solved yet. Technologies and solutions allowing to access appropriate training data will allow companies to differentiate in the ML context. ML technologies such as specific architectures are often commodity duet to the open-source appreciation in the ML community.

Even though corresponding approaches require less data for training, appropriate means to get corresponding data is still a major challenge.

It is therefore the objective of the invention to offer a solution to the challenges mentioned above.

The problem is solved by a computer-implemented method according to the features of claim 1.

The problem further is solved by a computer program product according to the features of claim 7 and a Computer Aided Engineering System according to the features of claim 8.

Further embodiments of the invention are described in the dependent claims. The invention is also depicted in the figures, as follows:
- Figure 1: Basic workflow of performing an accelerated and super-resolved simulation in comparison of an execution of a low- or medium-resolution simulation
- Figure 2: 3D physics solver with a local ML-based correction
- Figure 3: Concept of a local learning approach, where a correction stencil is learned.
- Figure 4: Super-resolution of a medium-resolution simulation to a high-resolution simulation
- Figure 5: Basic workflow of a local incremental training of ML-based acceleration and super resolution models.
- Figure 6: Further Basic workflow of a local incremental training of ML-based acceleration and super resolution models
- Figure 7: An example of a use case with a liquid flow tube, containing an obstruction
- Figure 8: an example of a use case calculation in the industrial field, a car rear view mirror in the flow channel
- Figure 9: a more detailed basic concept.

The invention combines local incremental learning approaches for ML-acceleration, and ML-based super-resolution technologies with a federated learning approach. While the individual building blocks are known, the specific combination has not been explored so far.

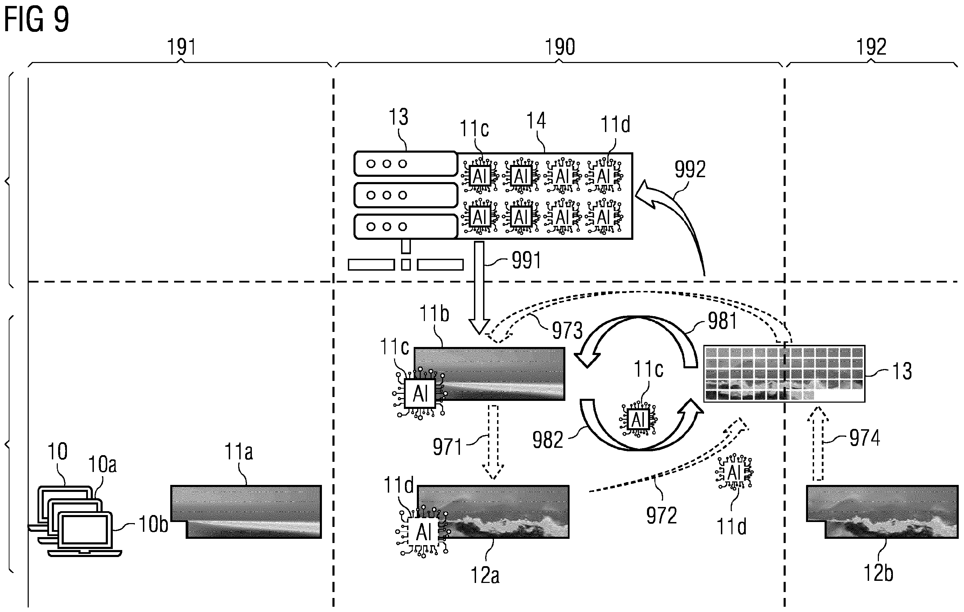

With local it is especially meant that the underlying dataset can be broken up into individual parts, where based of one fracture of the information it is not possible for externals to reconstruct the data based on one of the parts. This will be also described in more detail in figure 9.

Federated learning (also known as collaborative learning) is a machine learning technique that trains an algorithm via multiple independent sessions, each using its own dataset. This approach stands in contrast to traditional centralized machine learning techniques, where local datasets are merged into one training session, as well as to approaches that assume that local data samples are identically distributed. Federated learning enables multiple actors to build a common, robust machine learning model without sharing data, thus addressing critical issues such as data privacy, data security, data access rights and access to heterogeneous data. Its applications engage industries including defense, telecommunications, Internet of Things, and pharmaceuticals. Federated learning aims at training a machine learning algorithm, for instance deep neural networks, on multiple local datasets contained in local nodes without explicitly exchanging data samples. The general principle consists in training local models on local data samples and exchanging parameters (e. g. the weights and biases of a deep neural network) between these local nodes at some frequency to generate a global model shared by all nodes.

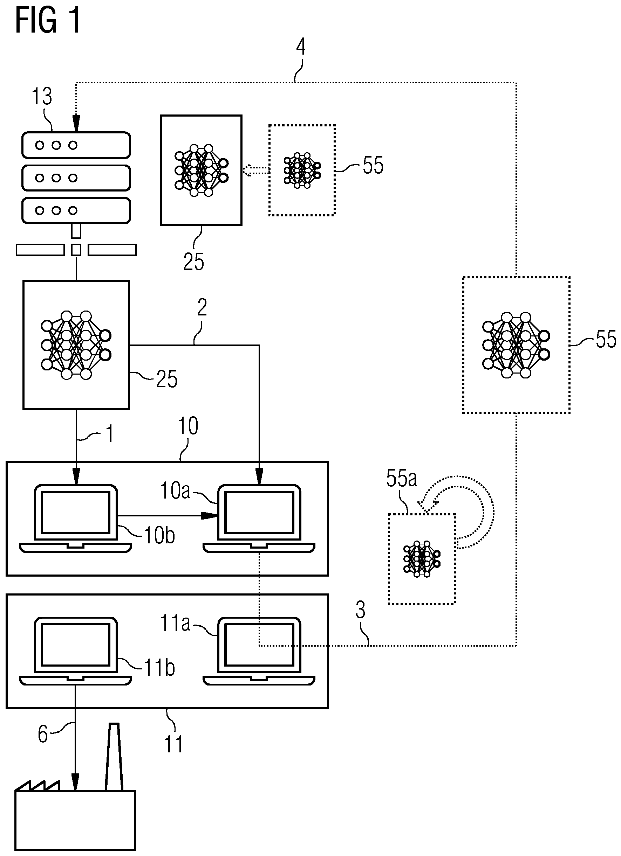

A basic overview of the invention is shown in Figure 1 and described in detail further below. It is independent of specific ML technologies and can work with a broad set of different ML technologies.

Step 1: Trained ML models 25 for simulation acceleration are hosted 1 in a central server 13. It could be one general model 10, for example for covering various fluids and gases, or specific models, e.g., a separate for each medium. Further trained ML models for super-resolution 10a are provided.

Step 2: The corresponding models are distributed 2 to simulation instances 10, 10a (e.g., via automatic or manual download to specific instances) and can be used to accelerate and / or super-resolve low or medium resolution simulations. The simulation instances are based locally for example at the computation site of a factory and when receiving the results of the locally conducted simulations these results can be used for example for controlling a production process in a production site, 6 or visualizing the respective production processes.

Step 3: Whenever a super-resolution simulation is executed, the corresponding results can be used to incrementally train and update the (local) acceleration and super-resolution model 55, 55a. Thereby a single simulation result corresponds to multiple training datasets due to the local nature of the underlying ML-models. The concept would also apply for global ML-models.

Step 4: These incrementally updated models 55, 55a are then pooled by the central server 25 again, to update a global model by means of federated learning. Then you can return to an proceed with Step 1 and an enhanced model 25.

Starting in the top-left side of the diagram of Figure 5, it starts with the Setup of a simulation, 61. The first decision 62 is to whether it needs a standard simulation or an augmented simulation. With a standard simulation 63 you use a low or medium resolution simulation algorithm and in the end visualizing, 64 the result 69.

On the other side of the diagram, if you need an accelerated or augmented simulation, get 65 a (the latest) simulation ML-accelerator and /or ML-Super Resolution Model from a central server 13. In a first step 66 a standard low/medium resolution simulation algorithm is used, 11c, which offers a fast calculation and a very good accuracy. In a second step, the visualization of the result will be much better 68, using a ML model that is specialized on enhancing the visualization.

Ideally the invention is based on local-models, i.e., ML-models which only take local relationships into account, as depicted in Figure 3, but could be also used in principle for any ML model. In most cases Neural Networks will be used, but other ML models, like Gaussian Processes or even Polynomials, can be used. A Gaussian process represents a distribution over functions by specifying a multivariate normal (Gaussian) distribution over all possible function values. It is possible to easily manipulate Gaussian distributions to find the distribution of one function value based on the values of any set of other values.

The ML models could be a few general ones or many different ones for different usage scenarios, e.g., differentiating stationary and in-stationary simulations.

### (1) Machine Learning Models

The description addresses the specific learning architecture and will use ML models, which are typically commodity. The focus is on the federated training process and learning only local relationships and not global relationships that allows to leverage simulation results of users without gaining access to their protected data. Local models do not contain any geometric information while global learning approaches carry this information typically indirectly.

### (2) Accelerate and super-resolve simulations

When adopting the concept depicted in Figure 1, the basic workflow of a simulation execution does not change. Specifically, the user will not experience any major differences, nor will he require new training. The simulation setup does not differ choosing an ML-augmented simulation. The ML-Accelerator will be used to adapt a low/medium resolution simulation such that given the same number of degrees of freedom it provides a higher accuracy for averaged quantities. Since the resolution of such a simulation is limited, it requires an ML-based super resolution during the visualization to also increase the fidelity / quality of detailed flow phenomena, e.g., turbulent structures in a dynamic simulation.

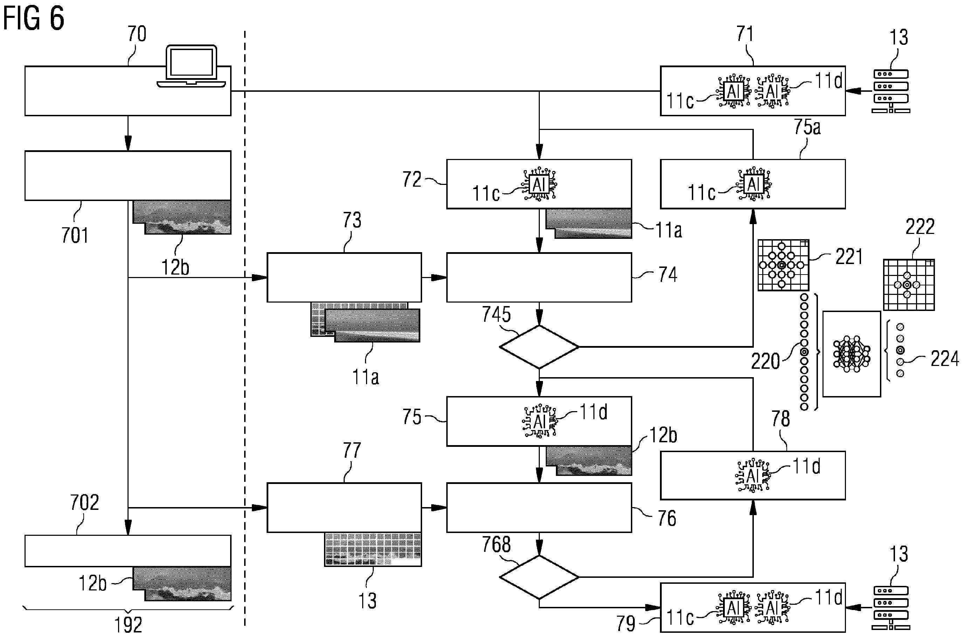

Figure 6 shows a Basic workflow of a local incremental training of ML-based acceleration and super resolution models.

### (3) Incremental training of acceleration and super-resolution ML-models

Whenever a simulation user runs a super-resolution simulation, the corresponding results can be used to train the ML-based acceleration and ML-based super resolution model as shown in Figure 6. The training of the two models is thereby independent.

The training itself will take place locally on the same computational instance. Even though the training itself requires multiple executions of small and medium-resolutions simulations, the total amount will have a smaller computational footprint as the super-resolution simulation and therefore will not lead to additional computational costs. Ideally the ML-models are of a local nature. Due to the local nature of the ML-models, i.e., learning local relationships only the training does not expose any IP, and the local training on the same instance, the incrementally trained model will not contain any design IP, such as geometry, which is present in the original simulation models.

The advantages of the invention described become clear when the training is carried out in a distributed manner, an automatic iterative ML training, that is conducted in the background, requiring less computational effort than a local, high-resolution simulation.

In a first step 70, a simulation is set up on a specific computer or instance. If you proceed with a conventional high-resolution simulation, e. g. a LES CFD simulation, 701, you get a picture 12b which can be processed in a next step 702 to a visualization, 12b. The boxes on the left side of this figure, 192, are behind the barrier, as described before, the data is protected from access by third parties. In step 71, the latest ML models are fetched from the (central) server 13.

This models are then used for a low/medium resolution simulation, eventually plus ML Accelerator.

Receiving the results of the standard high-resolution simulation 12b, and averaging this datasets (optionally with localization) those were taken into account for a loss function and an error estimation in the simulation of the data, 74.

Using a Threshold value for estimating, whether the error is too big, 745 then the model needs retraining, 220, 221, 222, 224 in a feedback loop 75a.

If the model is (finally) good enough, then super-resolution rendering, 75, is applied.

A second loss function and error estimation takes place, 76. Again optionally localized, data 77, 13 is used for improving the result. And again, if the result does not meet the Threshold, 768, a retraining of the model iis done, 78, in a feedback loop.

Only then, if the result meets all the requirements, the so-trained model will be uploaded to the server for further use, 79.

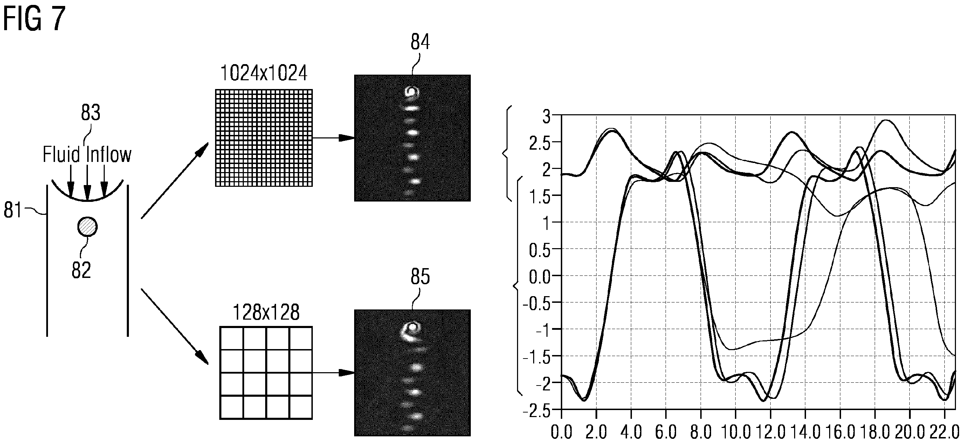

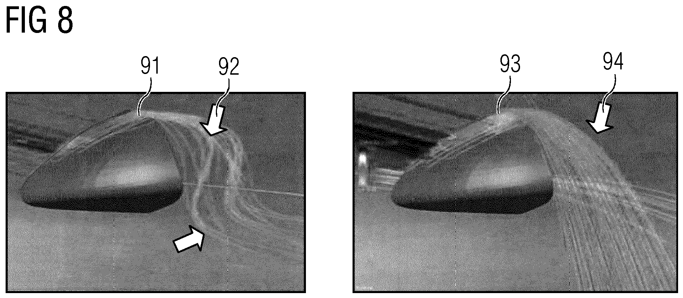

Figure 7 and 8 show example of use cases in the industrial environment, in figure 7 there is depicted a liquid flow tube 83, containing an obstruction 82. The simulation with the low resolution is s shown in the lower picture 85, and the simulation with the high resolution is shown in the upper picture 84. As one can see, the results vary significantly, so that the low-resolution simulation might not be sufficient for the dedicated task.

Figure 8 is another example of a use case calculation in the industrial field, a car rear view mirror in the flow channel, wherein the flow of air is simulated depending on the shape of the mirror, in a simple 91, 92 and a high-resolution manner 93, 94.

Figure 9 shows a more detailed version of the method.

A federated machine learning based accelerator solution for 3D multi-physics solvers is depicted in the middle of the figure, 190. The server 13 is hosting a pool 14 of different ML accelerator modules, 11c, 11d. The latest instances of those accelerator modules are provided to the simulation tool user. The horizontal dotted line shows the border between the Simulation Tool provider and the Simulation Tool User.

On the User side, the low and medium resolution simulation with the ML accelerator will be proceeded, single or together.

As a next step, 971 a ML-accelerated and enhanced simulation, with the result being a artificially generated enhanced picture 12a, being used then e.g. as the basis for the production of the simulated product. This step can take (at the moment) up to several hours, in comparison to the first step, with more in the minutes. This result can then be used in a retraining, 972, especially in a local incremental training of the super resolution module 11d.

The retraining step can be repeated as often as necessary, 981, for locally retrain the ML accelerator module 11c.

It is further advantageous to then return this retrained module back to the pool, 992.

On the right hand of the figure, it is shown that the simulation dataset is broken down in individual local data sets, 13. This means that for every piece of information, the model can be used individually, and even if part of the information gathered in the training is sent back to the pool, it is not possible for anybody outside to reengineer the underlying data. 12b

### (4) Federated Learning

Since the locally incrementally trained models do not contain any IP, they can be freely uploaded to the central server which pools the different models into one central set of models by means of federated learning.

The overall concept is summarized in Figure 9. Compared to state-of-the-art technologies, the proposed invention allows to uniquely benefit from simulation results datasets of all simulation users to construct more accurate and faster simulation tools.

While the methods have been introduced above along CFD and the coverage of turbulent structures, the approach is extremely versatile. It could be used to represent boundary layers more effectively or even be used in different physics, e. g., to capture correct material behavior when considering multiscale phenomena in mechanical or thermal simulations. For an application in different domains only limited adaptation is required of the technology itself. Corresponding ML models would need to be trained only on the corresponding data.

Another example for a simulation is shown in Figure 7, that is simulating a pipe 81 through which a liquid flows in one direction, see the arrows 83. in the pipe there is an obstacle 82 which influences the passage of the liquid and creates turbulences (depending also on the kind of liquid). For calculation of the simulation, e. g. the Navier Stokes Equations can be used.

By using a super-resolution simulation (1024 x 1024), the result will be shown on the top, by an industry grade solver. This of course needs more computing power than a low-resolution simulation (with a grid of 128 x 128, which is 40 times faster than the super-resolution simulation. But the result 85 is inaccurate, compared to the reference simulation of the super-resolution simulation, which is not desirable.

The described method allows to continuously learn improved ML-models whenever tools are used for highly resolved simulations such as multi-scale mechanics simulations or dynamic LES CFD simulation.

Furthermore, any accelerated simulation model would not only be seamlessly integrated, users can switch from fast ML-accelerated / ML-augmented to classical super-resolution simulations with consistency in flow properties and accuracy. Not only does this provide a unique and trustful user experience but also would allow to run the simulation at the level of speed required for the concrete use case.

## Claims

1. A computer implemented method for Computer Aided Engineering,
for designing of an optimized industrial product for intended operating conditions in form and further physical properties of the product,
by using Machine Learning Models,
with the steps:
a) receiving an initial Machine Learning Model (25) from a central server (13),
b) performing a first training (10b) of the Machine Learning Model on a local server (10), wherein the first training uses a low-resolution model-simulation, and
c) performing a second training (10a) of the Machine Learning Model on the local server (10), wherein the second training uses a super-resolution model-simulation, and
outputting a design model for the industrial product (6) for use thus production control of the product in an industrial plant.

2. The computer implemented method according to claim 1, **characterized in, that**
the central server (13) hosts a least two Machine Learning Models (25),
wherein at least one Machine Learning Model is a general purpose model and at least one Machine Learning Model is a specific purpose model.

3. The computer implemented method according to claim 1 or 2, **characterized in, that**
a) returning the locally trained and updated Machine Learning Model (55) back to the central server (13) and
b) saving (4) the trained and updated Machine Learning Model on the central server (13) and
c) updating the initial Machine Learning Model (25) with the locally trained Machine Learning model (55).

4. The computer implemented method according to one of the previous claims,
**characterized in, that**
a local model is used, that only uses local relationships.

5. The computer implemented method according to one of the previous claims,
**characterized in, that**
the Machine Learning Model uses a Neural Network.

6. The computer implemented method according to one of the previous claims,
wherein the super-resolution model-simulation is used during visualization.

7. Computer program product, suitable and arranged to perform a method according to the features of any of the preceding claims.

8. Computer Aided Engineering System on a local server (10), for designing an optimized industrial product taking into account intended operating conditions in form and further physical properties of the product,
- wherein the system is suitable for training a Machine Learning Model (10b),
- wherein the system is suitable for choosing and receiving an initial Machine Learning Model (25) from a central server (13),
- wherein the system is suitable for performing a first training (10b) of the Machine Learning Model (10), wherein the first training uses a low-resolution model-simulation, and
- wherein the system is suitable for performing a second training (10a) of the Machine Learning Model, wherein the second training uses a super-resolution model-simulation, and
- wherein the system is suitable for returning the locally trained Machine Learning Model (55) back to the central server (13) for updating the initial Machine Learning Model (25) with the locally trained Machine Learning model (55), and for saving (4) the updated Machine Learning Model on the central server (13) and
wherein the system is suitable for outputting a design model for the industrial product (6) for use thus production control of the product in an industrial plant.

9. The Computer Aided Engineering System according to claim 8,
- wherein the system is suitable for returning the locally trained and updated Machine Learning Model (55) back to the central server (13) and
- wherein the system is suitable for saving (4) the trained and updated Machine Learning Model on the central server (13) and
- wherein the system is suitable for updating the initial Machine Learning Model (25) with the locally trained Machine Learning model (55).

10. The Computer Aided Engineering System according to one of the previous claims 8 or 9,
**characterized in that**
a local model is used, that only uses local relationships.

11. The Computer Aided Engineering System according to one of the previous claims 8 to 10,
**characterized in that**
the Machine Learning Model uses a Neural Network.

12. The Computer Aided Engineering System according to one of the previous claims 8 to 11,
wherein the super-resolution model-simulation is used during visualization.

13. Central Server (13), in communication with the Computer Aided Engineering System, according to one of claims 8 to 12, **characterized in, that**
the central server (13) hosts a least two Machine Learning Models (25),
wherein at least one Machine Learning Model is a general-purpose model and at least one Machine Learning Model is a specific purpose model.
